# EUROPEAN PATENT APPLICATION

(11) **EP 3 819 788 A1**
(43) Date of publication of application: **12.05.2021**
(21) Application number: 18931858.7
(22) Date of filing: 31.08.2018
(51) Int. Cl.: G06F 16/27

(54) **DATA PROCESSING SYSTEM AND DATA PROCESSING METHOD**

(71) Applicant: Huawei Technologies Co., Ltd., Longgang Shenzhen, Guangdong 518129 (CN)
(72) Inventor: DAI, Mingyang, Shenzhen, Guangdong 518129 (CN); LIN, Jiashu, Shenzhen, Guangdong 518129 (CN); CHENG, Chuanning, Shenzhen, Guangdong 518129 (CN)
(74) Representative: Maiwald Patent- und Rechtsanwaltsgesellschaft mbH
(86) International application number: PCT/CN2018/103669
(87) International publication number: WO 2020/042182

(57) **Abstract**

This application provides a data processing system (600) and a data processing method. The data processing system (600) includes a first computing node, the first computing node includes an AI processor (610) and a reducing operator (620), the AI processor (610) is configured to perform an AI operation to generate first data of the first computing node, and the reducing operator (620) is configured to perform a reducing operation on second data from a second computing node and the first data, to generate a reducing operation result. Because the AI processor (610) and the reducing operator (620) are capabel of running in parallel, a quantity of times of reading and writing a memory module of the first computing node in the reducing operation can be decreased, a quantity of times of scheduling can be decreased, and an impact of the reducing operation on a cache of the AI processor (610) can be avoided. In this way, the reducing operation and the AI operation can be performed in parallel. This improves training efficiency of a deep neural network.

## Description

### TECHNICAL FIELD

This application relates to the field of artificial intelligence computing, and in particular, to a data processing system and a data processing method.

### BACKGROUND

Artificial intelligence (artificial intelligence, AI) is a method for simulating human intelligence by using a computer, and has a broad application prospect in the fields such as speech recognition, image processing, and complex games. Using a deep neural network to extract features from a large amount of raw data and perform learning is an important reason why the AI can be widely used in the foregoing fields. With improvement of performance of the deep neural network, a network depth, a quantity of network parameters, computation algorithm strength, and training datasets are increasing, and computation complexity is also greatly increased. As a result, training time is greatly increased.

Using a ResNet-50 network as an example, training is performed based on an ImageNet training dataset, and a high-performance server formed by eight commonly used K80s is used. It takes 44 hours to complete training of 90 generations. For some new deep neural networks, a plurality of groups of hyper parameters (hyper parameters) usually need to be tried, and an ideal result can be obtained only after the deep neural network is repeatedly adjusted and optimized. Using an existing deep neural network training method needs to spend more time, which adversely affects AI application.

In a process of training the deep neural network, a reducing operation needs to be performed on a plurality of pieces of data. For example, an addition operation needs to be performed on data generated by two AI computing nodes. When performing the reducing operation, an AI computing node (for example, an AI computing node 1) needs to read data 0 from another AI computing node (for example, an AI computing node 0), and write the data 0 into a buffer of the AI computing node 1. Then, the AI computing node 1 reads data 1 from a memory of the AI computing node 1, sends the data 1 to an AI processor, and sends the data 0 from the buffer to the AI processor. After completing the reducing operation on the data 0 and the data 1, the AI computing node 1 writes a reducing operation result into the memory of the AI computing node 1. In addition, AI computing and the reducing operation are performed on a same processor at different time, resulting in low computing efficiency. How to improve reducing operation efficiency becomes a problem.

### SUMMARY

This application provides a data processing system and a data processing method, to improve reducing operation efficiency.

According to a first aspect, a data processing system is provided. The system includes a first computing node. The first computing node includes an AI processor and a reducing operator. The AI processor is configured to perform an AI operation to generate first data of the first computing node. The reducing operator is configured to perform a reducing operation on second data from a second computing node and the first data, to generate a reducing operation result.

Because the AI processor and the reducing operator are capabel of running in parallel, the data processing system provided in this application can improve reducing operation efficiency.

Optionally, the reducing operator includes: a reducing engine, configured to perform the reducing operation on the first data and the second data to generate the reducing operation result.

Optionally, the reducing operator further includes a memory access engine, configured to: obtain the second data from a second memory module of the second computing node; obtain the first data from a first memory module of the first computing node; send the first data and the second data to the reducing engine; and write the reducing operation result into the first memory module. This solution has the following beneficial effects: A quantity of times of reading and writing a memory module of the first computing node in the reducing operation is decreased, a quantity of times of scheduling is decreased, and an impact of the reducing operation on a cache of the AI processor is avoided. In this way, the reducing operation and the AI operation could be performed in parallel. This improves training efficiency of a deep neural network. For an association relationship between the beneficial effects and technical features, refer to descriptions in specific implementations.

Optionally, the memory access engine is specifically configured to: receive a reducing operation instruction; and perform, based on the reducing operation instruction, the following operations: obtaining the first data from the first memory module, obtaining the second data from the second memory module, and sending the first data and the second data to the reducing engine. The memory access engine of this solution could be controlled by an instruction at a software layer. In addition, the foregoing solution can prevent data that does not need to be reduced from being sent to the reducing engine, to improve data migration efficiency.

Optionally, the memory access engine is further configured to: generate an atomic command, where the atomic command includes at least one of a read command or a write command, the read command is used to command a memory controller to read the first data from the first memory module and send the first data to the reducing engine, and the write command is used to command the memory controller to write the reducing operation result into the first memory module; and send the atomic command to a memory controller of the second memory module.

An operation corresponding to the atomic command is an atomic operation, and the atomic operation refers to an operation that is not interrupted by a thread scheduling mechanism. Once the atomic operation starts, the atomic operation runs until the operation ends, and is not interrupted by an operation of another thread in a running process. In this way, even if a write operation and a read operation conflict with another memory update operation in a reducing operation process, the foregoing optional embodiment would ensure that the reducing operation result is not damaged. In addition, in the foregoing optional embodiment, commands of the write operation and the read operation do not need to be transferred on a bus, to reduce bus resources occupied by the reducing operation.

Optionally, the memory access engine is a direct memory access DMA engine or a remote direct memory access RDMA engine.

Optionally, the reducing operator further includes a converter, configured to perform data format conversion processing on the reducing operation result. Because the data type conversion processing does not need to be performed in the AI processor, the foregoing solution would enable the AI processor to focus on AI computing, to improve the training efficiency of the deep neural network.

Optionally, the first computing node further includes the first memory module, and the first memory module is configured to store the first data.

Optionally, the data processing system further includes the second computing node.

Optionally, the first computing node and the second computing node are located in different apparatuses.

Optionally, the reducing operator includes at least two operation channels, and the at least two operation channels are configured to perform the reducing operation in parallel. Therefore, each channel processes one complete reducing operation pipeline, and a plurality of reducing operation pipelines run concurrently, to improve training performance of an entire deep neural network.

According to a second aspect, this application further provides a data processing method, including: performing an AI operation by using an AI processor in a first computing node in a data processing system, to generate first data of the first computing node; and performing a reducing operation on the first data and second data from a second computing node in the data processing system by using a reducing operator in the first computing node, to generate a reducing operation result.

Optionally, the method further includes: obtaining the second data from a second memory module of the second computing node by using a memory access engine in the reducing operator.

Optionally, the method further includes: performing data format conversion processing on the reducing operation result by using a converter in the reducing operator. Because the data type conversion processing does not need to be performed in the AI processor, the foregoing solution would enable the AI processor to focus on AI computing, to improve training efficiency of a deep neural network.

Optionally, the performing a reducing operation on the first data and second data from a second computing node in the data processing system by using a reducing operator in the first computing node, to generate a reducing operation result includes: performing a multi-channel parallel reducing operation on the first data and the second data by using at least two operation channels in the reducing operator. Because the reducing operator is capable of simultaneously processing data generated by at least two rings, the foregoing solution would improve training efficiency of a deep neural network.

The foregoing method has the following beneficial effects: A quantity of times of reading and writing a memory module of the first computing node in the reducing operation is decreased, a quantity of times of scheduling is decreased, and an impact of the reducing operation on a cache of the AI processor is avoided. In this way, the reducing operation and the AI operation could be performed in parallel. This improves the training efficiency of the deep neural network. For an association relationship between a beneficial effect and a technical feature, refer to descriptions in specific implementations.

According to a third aspect, this application further provides a computer-readable storage medium. The computer-readable storage medium stores computer program code, and when the computer program code is executed by a processing unit or a processor, the method according to the second aspect can be implemented.

According to a fourth aspect, this application provides a computer program product. The computer program product includes computer program code, and when the computer program code is run by a processing unit or a processor, the method according to the second aspect is implemented. In addition, the computer program product may be installed in the data processing system according to the first aspect, so that the data processing system implements the functions according to the first aspect.

### BRIEF DESCRIPTION OF DRAWINGS

FIG. 1 is a schematic diagram of a ring applicable to this application;
FIG. 2 is a schematic diagram of an initial state in which each computing node of a ring performs a ring reduce algorithm;
FIG. 3 is a schematic diagram of a step of a ring reduce algorithm;
FIG. 4 is a schematic diagram of another step of a ring reduce algorithm;
FIG. 5 is a schematic diagram of an end state in which each computing node of a ring performs a ring reduce algorithm;
FIG. 6 is a schematic diagram of a data processing system according to this application;
FIG. 7 is a schematic diagram of another data processing system according to this application;
FIG. 8 is a schematic diagram of performing a reducing operation by a reducing engine according to this application;
FIG. 9 is a schematic diagram of performing a data migration operation by a memory access engine according to this application;
FIG. 10 is another schematic diagram of performing a data migration operation by a memory access engine according to this application;
FIG. 11 is a schematic diagram of performing a data format conversion operation by a converter according to this application;
FIG. 12 is a schematic diagram of still another data processing system according to this application; and
FIG. 13 is a schematic diagram of a data processing method according to this application.

### DESCRIPTION OF EMBODIMENTS

To improve training efficiency of a deep neural network, one method is to perform training by using a parallel distributed training algorithm. A process of the parallel distributed training algorithm is as follows:
1. All computing nodes in a cluster independently complete respective computations of mini-batch training data to obtain gradients.
2. All computing nodes in the cluster need to reduce the gradients obtained through computation, to form a reduced gradient.
3. The reduced gradient is distributed to each computing node in the cluster.
4. Each computing node computes a new parameter value based on the reduced gradient and a hyperparameter such as the learning rate.
5. All computing nodes could start a next round of iterative computation only after obtaining a new parameter.

It can be learned from the foregoing training algorithm that gradient reducing between nodes is not only performed on a critical path, but also frequently performed. Therefore, in a parallel distributed training solution, the gradient reducing between computing nodes is a key factor that affects training efficiency.

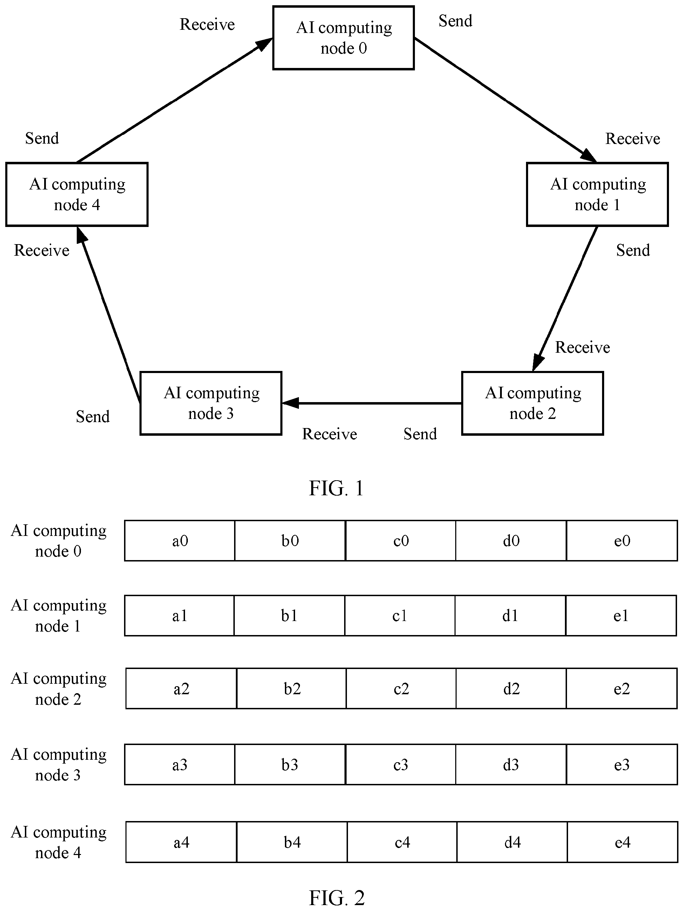

To efficiently perform the gradient reducing, currently, a ring all reduce (Ring All Reduce) algorithm is commonly used in academia and industry. A logical structure of a ring is shown in FIG. 1.

In FIG. 1, the ring includes five AI computing nodes, and each AI computing node is, for example, an AI chip. Each AI computing node has a preceding node and a post-order node, and a position of each AI computing node in the ring is determined by a creator (for example, user software) of the ring. For example, a preceding node of an AI computing node 0 is an AI computing node 4, and a post-order node of the AI computing node 0 is an AI computing node 1. Each AI computing node could receive data from a preceding node of the AI computing node, and could further send data of the AI computing node to a post-order node of the AI computing node. A plurality of computing nodes are located in a same system. The system is a cluster of one or more devices. Each computing node may be one apparatus or device, or a plurality of computing nodes are located in one apparatus or device. The apparatus or device may be various electronic devices, including but not limited to a server, a mainframe computer, a minicomputer, a portable computer, or a terminal. Each node may be a computing element in the apparatus device, for example, a chip, a chipset, or a circuit board that carries the chip or the chipset.

The ring shown in FIG. 1 is used as an example. In a preparation phase of a ring reduce algorithm, a creator (for example, user software) of the ring sends control information to each AI computing node, to perform slicing processing on data. Gradient data computed by each AI computing node is evenly divided into five chunks. For example, gradient data computed by five AI computing nodes shown in FIG. 1 is a, b, c, d, and e. Each AI computing node has complete data obtained through computation by the AI computing node. Initial states of the five AI computing nodes are shown in FIG. 2.

Subsequently, the five AI computing nodes enter a scatter reduce (scatter reduce) phase. Each AI computing node sends a piece of data of the AI computing node to a post-order node of the AI computing node, and performs reduce processing on data received by the preceding node and data stored by the AI computing node.

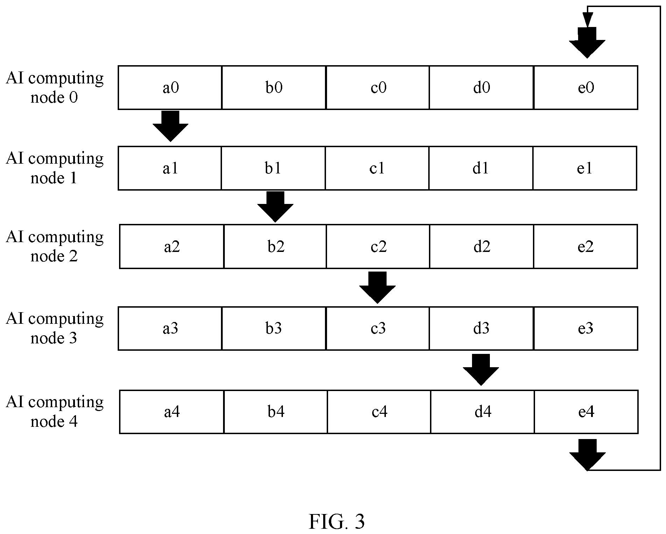

FIG. 3 illustrates one step of the scatter reduce phase. In this step, the AI computing node 0 sends a chunk a0 to the AI computing node 1, and after receiving the chunk a0, the AI computing node 1 performs a reducing operation on the a0 and a chunk a1 stored in the AI computing node 1. In addition, the AI computing node 1 sends a chunk b1 to an AI computing node 2. After receiving the chunk b1, the AI computing node 2 performs a reducing operation on the b1 and a chunk b2 stored in the AI computing node 2. The operations on other AI computing nodes are similar.

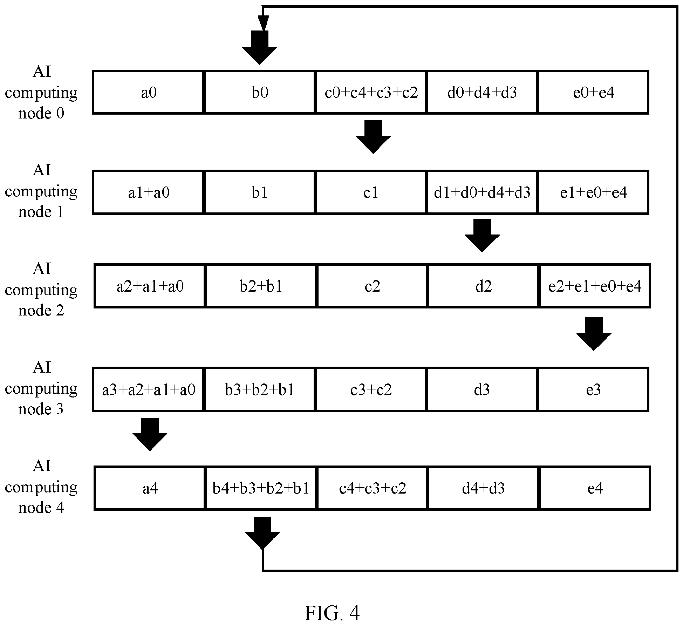

FIG. 4 illustrates another step of the scatter reduce phase. In this step, the AI computing node 0 is used as an example. The AI computing node 0 receives data b4+b3+b2+b1 from a preceding node (the AI computing node 4), and performs a reducing operation on the data and data b0 stored in the AI computing node 0. An obtained reducing operation result is b0+b1+b2+b3+b4. When receiving the data b4+b3+b2+b1, the AI computing node 0 sends data c0+c4+c3+c2 stored in the AI computing node 0 to a post-order node (the AI computing node 1), so that the post-order node performs gradient reducing operation.

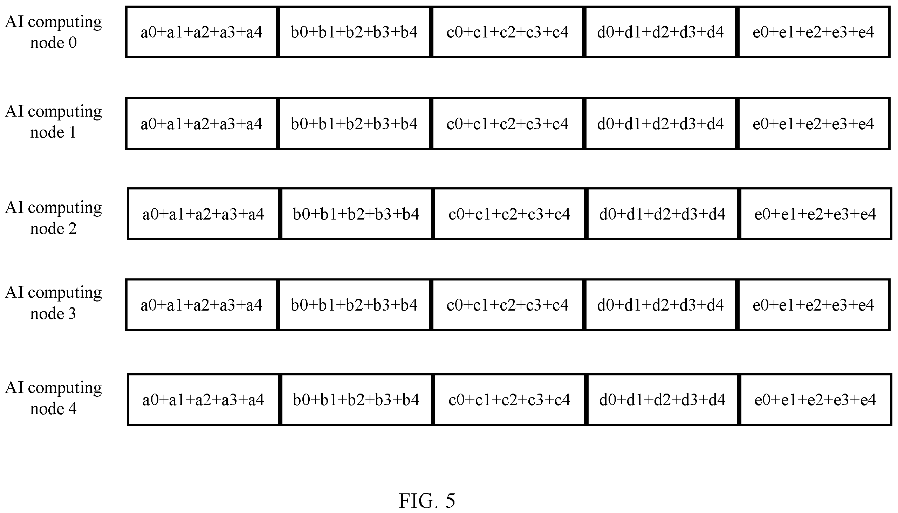

After the scatter reduce phase is completed, the ring reduce algorithm proceeds to a next step, namely, an all gather (all gather) phase. In the all gather phase, the ring shown in FIG. 1 sends a final result obtained by each AI computing node to another AI computing node through four times of transfer. For example, a final result obtained by the AI computing node 0 by performing a reducing operation on data b is b0+b1+b2+b3+b4, the AI computing node 0 transfers the result to the AI computing node 1, the AI computing node 1 transfers the result to the AI computing node 2, and so on. After four times of transfer, each AI computing node obtains the final result of the reducing operation on the data b. Similarly, for the other four pieces of data (a, c, d, and e), after four times of transfer, each AI computing node also obtains a final result of a reducing operation of each piece of data, as shown in FIG. 5.

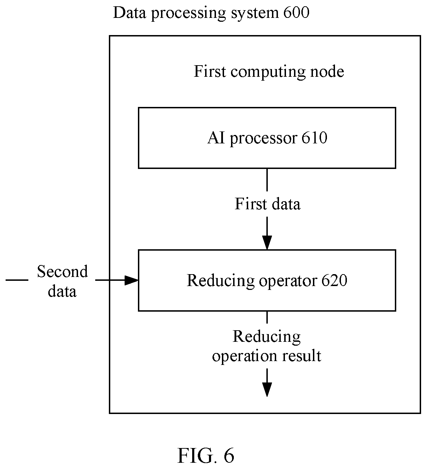

FIG. 6 shows a data processing system according to this application, so that a quantity of times of reading and writing a memory module in a reducing operation can be decreased, to improve training efficiency of a deep neural network.

As shown in FIG. 6, the data processing system 600 includes a first computing node, and the first computing node includes an AI processor 610 and a reducing operator 620.

The AI processor 610 is configured to perform an AI operation to generate first data of the first computing node.

The reducing operator 620 is configured to perform a reducing operation on second data from a second computing node and the first data, to generate a reducing operation result.

The AI processor 610 is, for example, a neural-network process unit, for example, a matrix operation array.

The reducing operator 620 is, for example, an addition operator, a multiplication operator, a maximum value operator, or a minimum value operator, or may be another type of device or logic circuit configured to perform the reducing operation.

The AI processor 610 is a unit dedicated to artificial intelligence computing, and is also referred to as a neural-network process unit (neural-network process unit, NPU). For example, the AI processor 610 may be a convolutional neural network (CNN) calculator, a recurrent neural network (RNN) calculator, or another neural processing unit with a similar function.

The reducing operator 620 may be a general purpose processor, a digital signal processor (digital signal processor, DSP), or a hardware accelerator, for example, may be an application-specific integrated circuit (application-specific integrated circuit, ASIC), a field programmable gate array (field programmable gate array, FPGA), or another programmable logic device, a transistor logic device, hardware component, or any combination thereof.

In this application, a reducing operation is an operation performed on at least two pieces of data according to a preset rule, and may be one or more of an addition operation, a subtraction operation, a multiplication operation, a division operation, a maximum value obtaining operation, and a minimum value obtaining operation, or may be another type of operation.

For example, the reducing operator 620 may perform the addition operation on the first data and the second data, and an obtained result is a sum of the two pieces of data. Alternatively, the reducing operator 620 may perform the maximum value obtaining operation on the first data and the second data, and an obtained result is data with a larger value in the two pieces of data. Alternatively, the reducing operator 620 may first perform the subtraction operation on the first data and the second data, and then multiply a result of the subtraction operation by the first data or the second data.

The AI processor 610 and the reducing operator 620 may be two physically separated components, for example, respectively located on two mainboards. The AI processor 610 and the reducing operator 620 may be two physically inseparable components. For example, the two components are located on a system on chip (system on chip, SOC).

The foregoing descriptions of the AI processor 610 and the reducing operator 620 are merely examples for description, and should not be construed as a limitation on the data processing system provided in this application.

The first data is, for example, data c1 in a memory module of the AI computing node 1 shown in FIG. 4, and the second data is, for example, data c0+c4+c3+c2 stored in a memory module of the AI computing node 0 shown in FIG. 4. The AI processor 610 is, for example, a processor in the AI computing node 1 in FIG. 3. When a controller of the data processing system 600, for example, a central processing unit (CPU), needs to schedule c0+c4+c3+c2 and c1 to complete the reducing operation, the reducing operator 620 may read c0+c4+c3+c2 from the memory module of the AI computing node 0, read c1 from the memory module of the AI computing node 1, and then perform the reducing operation (for example, the addition operation) on c0+c4+c3+c2 and c1, to obtain a reducing operation result c0+c1+c2+c3+c4. The reducing operator 620 writes the reducing operation result into the memory module of the AI computing node 1, to complete one gradient reducing operation of the deep neural network.

In the foregoing example, the AI computing node 1 undergoes only one read operation and one write operation. Compared with the reducing operation method in the background, the reducing operation method provided in the foregoing example decreases the consumption of memory bandwidth resources of the AI computing node 1. Saved memory bandwidth resources can be used for other AI computing. This improves the training efficiency of the deep neural network.

Second, the reducing operator 620 has a capability of reading data in the memory module of the AI computing node 0 and the memory module of the AI computing node 1, and the data processing system 600 can complete one reducing operation after only one scheduling (namely, inline reduce (inline reduce)). Compared with the reducing operation apparatus in the prior art, the reducing operation apparatus decreases the time required for one copy (copy) scheduling, and also improves the training efficiency of the deep neural network.

Third, AI computing (for example, deep neural network training) uses a single instruction multiple thread (single instruction multiple thread, SIMT) algorithm architecture. To be specific, the processor can process only one data stream or a plurality of data streams based on one instruction at one moment, and the AI computing and the reducing operation correspond to two different instruction stream sequences. As a result, the AI computing and the reducing operation in the prior art need to be performed in series. In the data processing system 600 provided in this application, the AI computing and the reducing operation are separately performed in different modules. Therefore, the data processing system 600 can process an AI computing task and a reducing operation task in parallel. This improves the training efficiency of the deep neural network.

Further, in the prior art, the AI computing and the reducing operation are performed in a same processor. When performing the AI computing, the processor needs to read data related to the AI computing from a memory and write the data into a cache (cache). When performing the reducing operation, the processor needs to read data related to the reducing operation from the memory and write the data into the cache. If the processor performs the AI computing and the reducing operation in series, the data related to the reducing operation stored in the cache causes pollution to the data related to the AI computing. Therefore, after completing the reducing operation, the processor needs to read the data related to the AI computing from the memory again and write the data into the cache, which affects a cache hit ratio of the AI computing, increases pressure of a cache system, and adversely affects efficiency of the AI computing.

In the data processing system 600, because the reducing operation is not executed in the AI processor 610, the data related to the reducing operation does not enter the AI processor 610, to avoid pollution to the data that is related to the AI computing and that is in the cache. In other words, the cache hit rate of the AI computing is not affected, and the pressure of the cache system is decreased. This improves the training efficiency of the deep neural network.

It should be understood that the data processing system provided in this application is described only by using the deep neural network as an example in the foregoing example. The data processing system provided in this application is not only applicable to the deep neural network, but also applicable to a scenario in which a data reducing operation needs to be performed between a plurality of other computing nodes, for example, a super computer field.

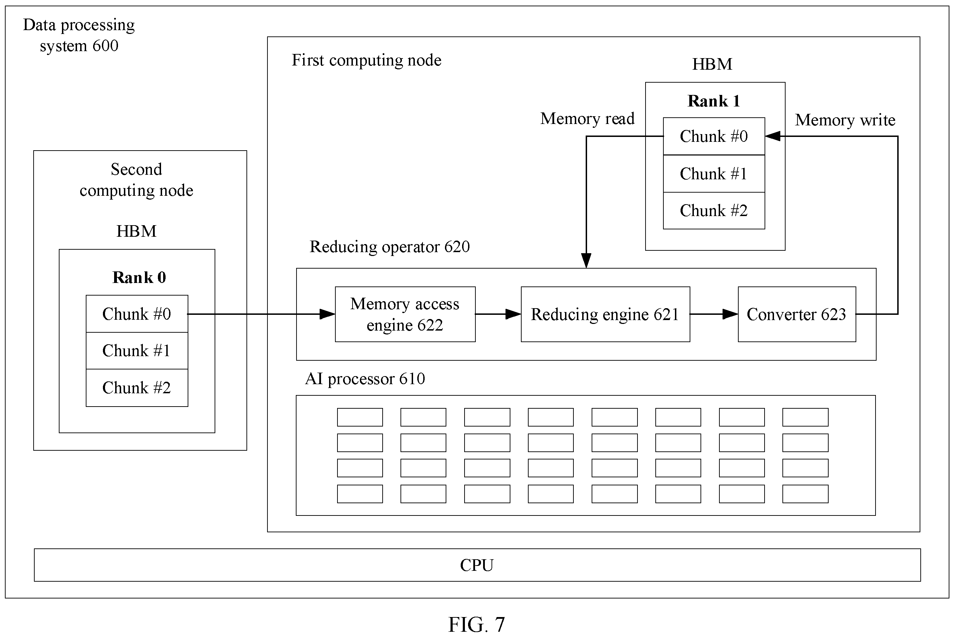

In the data processing system 600, the reducing operator 620 may include a reducing engine (reduce engine) 621. As shown in FIG. 7, the reducing engine 621 is configured to perform a reducing operation on the first data and the second data to generate a reducing operation result. A CPU in FIG. 7 is configured to schedule the first computing node and the second computing node to execute tasks, for example, execute an AI computing task or execute a reducing operation task. The CPU is merely an example for description, and the data processing system 600 may further include another type of controller or scheduler.

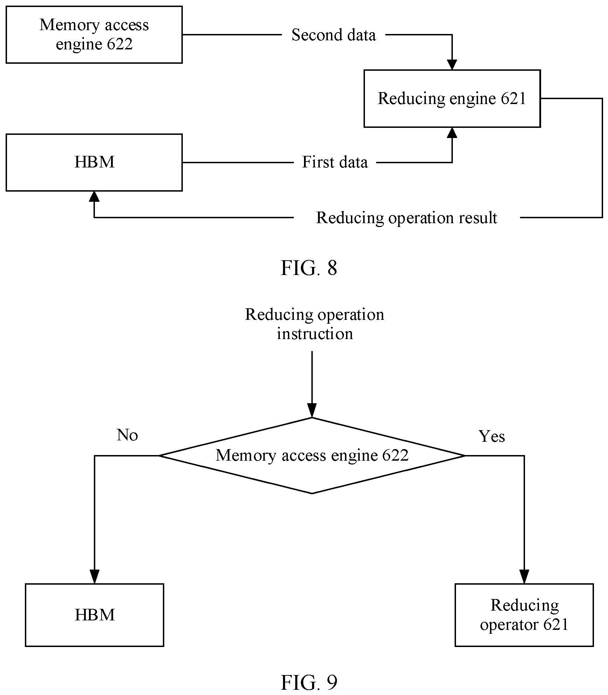

FIG. 8 is a schematic flowchart of performing the reducing operation by the reducing engine 621 according to this application. The reducing engine 621 may receive data input by the memory access engine 622 described below, and may further receive data input by a rank 1, perform the reducing operation on the received data, and then write a reducing operation result into an HBM.

A reducing operation type supported by the reducing engine 621 is, for example, one or more of the foregoing addition operation, subtraction operation, multiplication operation, division operation, maximum value obtaining operation, and minimum value obtaining operation.

The reducing operator 620 may further include a memory access engine 622, and the memory access engine 622 is configured to:
obtain the first data from a first memory module;
obtain the second data from a second memory module;
send the first data and the second data to the reducing engine 610; and
write a reducing operation result into the first memory module.

The first memory module is, for example, a high bandwidth memory (high bandwidth memory, HBM) of the first computing node, and the second memory module is, for example, an HBM of the second computing node. One or more chunks (chunk) are stored in the HBM of the first computing node, and the one or more chunks form the rank (rank) 1. Similarly, one or more chunks (chunk) are stored in the HBM of the second computing node, and the one or more chunks form a rank (rank) 0.

As shown in FIG. 7, the memory access engine 622 reads a chunk #0 (namely, the second data, for example, c0+c4+c3+c2) from the rank 0, reads a chunk #0 (namely, the first data, for example, c1) from the rank 1, and sends the two chunks #0 to the reducing engine 621. After the reducing engine 621 completes the reducing operation, the memory access engine 622 writes the reducing operation result in the rank 1.

The memory access engine 622 transfers data completely by using hardware, and does not require participation of a central processing unit (central processing unit, CPU). In this method, data is transferred between a main memory (main memory) and a buffer (buffer), between the main memory and the main memory, or between the main memory and a peripheral by using a mechanism independent of the CPU. For example, the memory access engine 622 receives a migration task from software by using a descriptor, controls hardware (for example, a chip circuit) to complete a migration operation, and then notifies the software of a migration completion state by using the descriptor or an interrupt. Because the foregoing solution does not require a CPU parameter, the foregoing solution releases a processing capability of the CPU, and implements high-bandwidth and low-delay data migration.

In addition, the memory access engine 622 further has single data stream processing logic. To be specific, the memory access engine 622 determines, based on an instruction type, whether the reducing operation needs to be performed on a current data stream. The instruction comes from software, for example, software run by the CPU may generate the instruction.

As shown in FIG. 9, the memory access engine 622 receives a reducing operation instruction, the reducing operation instruction is used to instruct the memory access engine 622 to perform a reducing operation on the first data and the second data, and the memory access engine 622 sends the first data to the reducing engine 621. When the memory access engine 622 does not receive the reducing operation instruction, or when the memory access engine 622 receives a migration instruction, the memory access engine 622 sends the first data to the HBM of the first computing node.

The foregoing solution can prevent data that does not need to be reduced from being sent to the reducing engine 621, to improve data migration efficiency.

In an optional embodiment, the memory access engine 622 is further configured to:
generate an atomic (atomic) command, where the atomic command includes at least one of a read command or a write command, the read command is used to command a memory controller to read the first data from the first memory module and send the first data to the reducing engine, and the write command is used to command the memory controller to write the reducing operation result into the first memory module; and
send the atomic command to a memory controller of first memory module.

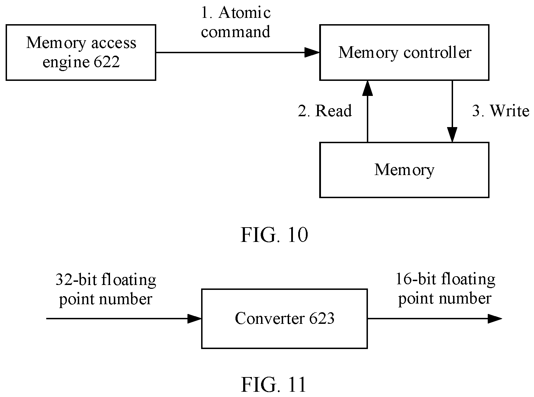

FIG. 10 is a schematic flowchart of migrating data by the memory access engine 622.

When the memory access engine 622 needs to read the first data, the memory access engine 622 generates the atomic command. The atomic command includes two operands used to indicate a source address (namely, an address, of the first data, stored in the rank 1) and a destination address (namely, an address of the reducing engine 621) of the first data, and the atomic command further includes the read command and the write command. After receiving the atomic command, the memory controller corresponding to the rank 1 sends the first data from the rank 1 to the reducing engine 621, to complete a memory read operation.

When the memory access engine 622 needs to write the reducing operation result into the rank 1, the memory controller of the rank 1 sends the reducing operation result from the reducing engine 621 to the rank 1 based on the received atomic command, to complete a memory write operation. For example, the operand may also be an immediate number, which is not expanded in this embodiment.

An operation corresponding to the atomic command is an atomic operation (for example, a write operation and a read operation shown in FIG. 10), and the atomic operation refers to an operation that is not interrupted by a thread scheduling mechanism. Once the atomic operation starts, the atomic operation runs until the operation ends, and is not interrupted by an operation of another thread in a running process. In this way, even if a write operation and a read operation conflict with another memory update operation in a reducing operation process, the foregoing optional embodiment can ensure that the reducing operation result is not damaged.

In addition, in the foregoing optional embodiment, commands of the write operation and the read operation do not need to be transferred on a bus, to reduce bus resources occupied by the reducing operation.

In another optional embodiment, the reducing operator 620 further includes:

A converter (convertor) 623 is configured to perform data format (which may also be referred to as a "data type") conversion processing on the reducing operation result.

The data type of the reducing operation result generated by the reducing engine 621 may be one or more of the following data types: a 32-bit floating point number (float 32), a 16-bit floating point number (float 16), an integer (int), an unsigned integer (uint), a keyword (char), a 64-bit floating point number (float 64), an int 64, and a uint 64. If the data type of the reducing operation result is not a type required by the HBM, the converter 623 may convert the reducing operation result into the data type required by the HBM, and then the converter 623 sends the reducing operation result obtained after the data type conversion is completed to the HBM.

FIG. 11 is a schematic flowchart of data conversion according to this application.

The data type of the reducing operation result generated by the reducing engine 621 is a float 32, and the data type supported by the HBM is a float 16. In this case, the converter may convert the reducing operation result of the float 32 into the reducing operation result of the float 16.

The foregoing embodiment is merely an example for description. The reducing engine 621 provided in this application may support conversion of more data types.

Because the data type conversion processing does not need to be performed in the AI processor, the foregoing solution can enable the AI processor to focus on AI computing, to improve the training efficiency of the deep neural network.

In a training process of the deep neural network, a plurality of rings usually run in parallel. The reducing operator 620 further provided in this application may support at least two operation channels, and the at least two operation channels are configured to perform reducing operation in parallel.

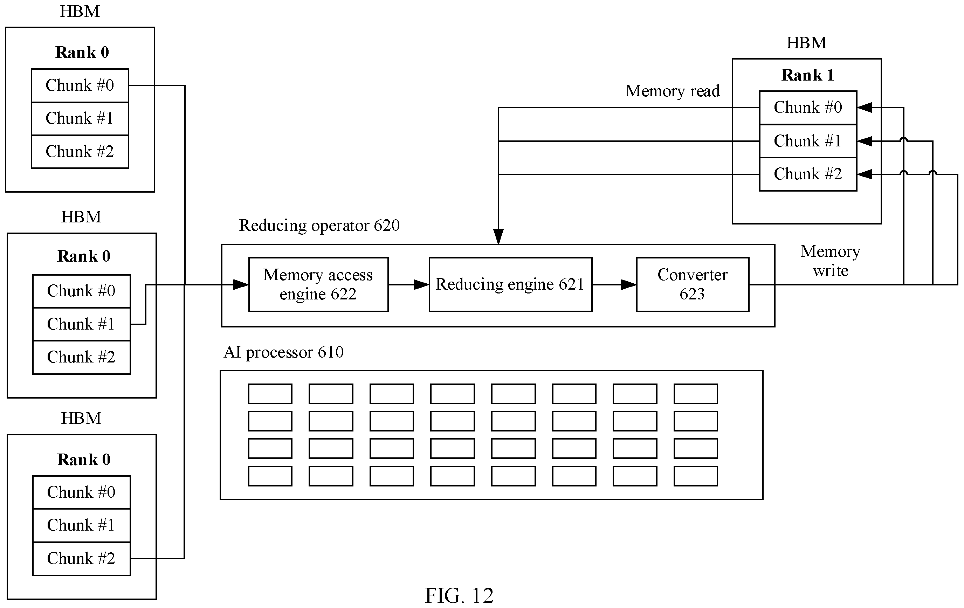

As shown in FIG. 12, the current deep neural network has three rings, and data generated by each ring forms a reducing operation pipeline (reduce pipeline). The reducing operator 620 includes three channels, and the channels are independent of each other. Each channel processes one complete reducing operation pipeline, and a plurality of reducing operation pipelines run concurrently, to improve training performance of the entire deep neural network.

Optionally, the data processing system 600 further includes a first memory module and a second memory module. In other words, the first memory module, the second memory module, the reducing operator 620, and the AI processor 610 execute a data processing task as a whole. For example, a user may purchase the data processing system 600 including the first memory module and the second memory module to complete deep neural network training, without a need to separately purchase the first memory module and the second memory module, or without a need to rent the first memory module and the second memory module from another supplier. The first memory module and the second memory module are, for example, the HBM described above, and may alternatively be memories of other types, and specific product forms of the first memory module and the second memory module are not limited in this application.

It may be understood that the data processing system 600 may further include more memory modules and/or other components.

It should be noted that the data processing system 600 further includes the first memory module and the second memory module, which does not mean that the first memory module and the second memory module are definitely in a same physical entity (for example, a server).

For example, the first memory module and the second memory module are located in a same server, and in this case, the memory access engine 622 may be a direct memory access (direct memory access, DMA) engine.

For another example, the first memory module and the second memory module are located in the same server, and in this case, the memory access engine 622 may be a remote direct memory access (remote direct memory access, RDMA) engine.

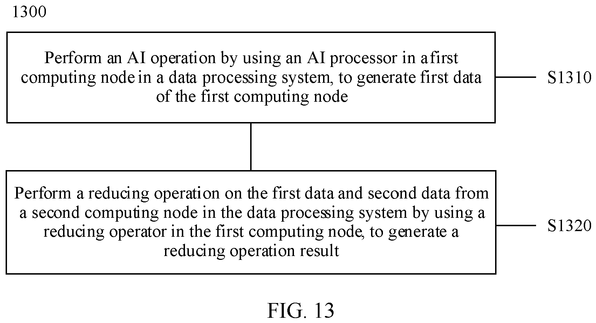

This application further provides a data processing method, and the data processing method may be performed by the data processing system 600. As shown in FIG. 13, the method 1300 includes the following steps.

S1310: Perform an AI operation by using an AI processor in a first computing node in a data processing system, to generate first data of the first computing node.

S1320: Perform a reducing operation on the first data and second data from a second computing node in the data processing system by using a reducing operator in the first computing node, to generate a reducing operation result.

A person skilled in the art may understand that, in the method 1300, for a specific implementation of each step, reference may be made to a process in which the reducing operator 620 in the data processing system 600 processes data. For brevity, details are not described herein again.

Therefore, the method 1300 has the following beneficial effects: A quantity of times of reading and writing a memory module of the first computing node in the reducing operation is decreased, a quantity of times of scheduling is decreased, and an impact of the reducing operation on a cache of the AI processor is avoided. In this way, the reducing operation and the AI operation can be performed in parallel. This improves the training efficiency of the deep neural network.

Optionally, the method 1300 further includes: obtaining the second data from a second memory module of the second computing node by using a memory access engine in the reducing operator.

Optionally, the method 1300 further includes: performing data format conversion on the reducing operation result by using a converter in the reducing operator.

Because the data type conversion processing does not need to be performed in the AI processor, the foregoing solution can enable the AI processor to focus on AI computing, to improve the training efficiency of the deep neural network.

Optionally, the S1320 includes: performing a multi-channel parallel reducing operation on the first data and the second data by using at least two operation channels in the reducing operator.

Because the reducing operator can simultaneously process data generated by at least two rings, the foregoing solution can improve training efficiency of a deep neural network.

It should be understood that sequence numbers of the foregoing processes do not mean execution sequences in various embodiments of this application. The execution sequences of the processes should be determined based on functions and internal logic of the processes, and should not be construed as any limitation on the implementation processes of this application.

It may be understood that at least one of the AI processor and the reducing operator may be a processor including a large quantity of logic circuits or circuit elements, and may perform a corresponding function by using a logic algorithm. Alternatively, at least one of the AI processor and the reducing operator may run software, and complete the foregoing computation by running the software. It may be understood that the software (or the software instruction) may include a corresponding software module. The software module may be stored in a random access memory (random access memory, RAM), a flash memory, a read-only memory (read only memory, ROM), an erasable programmable read-only memory (erasable programmable ROM, EPROM), an electrically erasable programmable read-only memory (electrically EPROM, EEPROM), a register, a hard disk, a mobile hard disk, a compact disc read-only memory (CD-ROM), or any other form of storage medium well-known in the art. In an optional example, the storage medium is coupled to any one of the AI processor and the reducing operator mentioned above, so that the AI processor and the reducing operator can read information from the storage medium and can write information into the storage medium. Certainly, the storage medium may be a component of the processor. Therefore, the method procedure in this embodiment may be understood as being completed by software driving hardware. When the software is executed by a processor, for example, executed by the AI processor and the reducing operator, the software may drive the AI processor and the reducing operator to work, to perform the method procedure shown in FIG. 13. This is not limited in this embodiment.

In addition, the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

The objectives, technical solutions, and benefits of this application are further described in detail in the foregoing specific embodiments. It should be understood that the foregoing descriptions are merely specific embodiments of this application, but are not intended to limit the protection scope of this application. Any modification, equivalent replacement or improvement made based on technical solutions of this application shall fall within the protection scope of this application.

## Claims

1. A data processing system, comprising a first computing node, wherein the first computing node comprises an artificial intelligence AI processor and a reducing operator, wherein
the AI processor is configured to perform an AI operation to generate first data of the first computing node; and
the reducing operator is configured to perform a reducing operation on second data from a second computing node and the first data, to generate a reducing operation result.

2. The data processing system according to claim 1, wherein the reducing operator comprises:
a reducing engine, configured to perform the reducing operation on the first data and the second data to generate the reducing operation result.

3. The data processing system according to claim 2, wherein the reducing operator further comprises:
a memory access engine, configured to: obtain the second data from a second memory module of the second computing node; obtain the first data from a first memory module of the first computing node; send the first data and the second data to the reducing engine; and write the reducing operation result into the first memory module.

4. The data processing system according to claim 3, wherein the memory access engine is specifically configured to:
receive a reducing operation instruction; and
perform, based on the reducing operation instruction, the following operations: obtaining the first data from the first memory module, obtaining the second data from the second memory module, and sending the first data and the second data to the reducing engine.

5. The data processing system according to claim 3 or 4, wherein the memory access engine is further configured to:
generate an atomic command, wherein the atomic command comprises at least one of a read command or a write command, the read command is used to command a memory controller to read the first data from the first memory module and send the first data to the reducing engine, and the write command is used to command the memory controller to write the reducing operation result into the first memory module; and
send the atomic command to a memory controller of the second memory module.

6. The data processing system according to any one of claims 3 to 5, wherein the memory access engine is a direct memory access DMA engine or a remote direct memory access RDMA engine.

7. The data processing system according to any one of claims 2 to 6, wherein the reducing operator further comprises:
a converter, configured to perform data format conversion processing on the reducing operation result.

8. The data processing system according to any one of claims 1 to 7, wherein the first computing node further comprises the first memory module, and the first memory module is configured to store the first data.

9. The data processing system according to any one of claims 1 to 8, further comprising the second computing node.

10. The data processing system according to any one of claims 1 to 9, wherein the first computing node and the second computing node are located in different apparatuses.

11. The data processing system according to any one of claims 1 to 10, wherein the reducing operator comprises at least two operation channels, and the at least two operation channels are configured to perform the reducing operation in parallel.

12. The data processing system according to any one of claims 1 to 11, wherein the AI processor and the reducing operator are capable of running in parallel.
